# EUROPÄISCHE PATENTANMELDUNG

(11) **EP 1 174 242 A2**
(43) Veröffentlichungstag der Anmeldung: **23.01.2002**
(21) Anmeldenummer: 01116873.9
(22) Anmeldetag: 11.07.2001
(51) Int. Cl.: B29C 45/16, B29C 45/32, B29C 45/73

(54) **Vefahren und Vorrichtung zum Spritzgiessen von aus mehreren Komponenten bestehenden Kunstoffartikeln**

(30) Priorität: 12.07.2000 DE 10033759
(71) Anmelder: Richard Herbst GmbH, 85402 Kranzberg (DE)
(72) Erfinder: Herbst, Richard, 85402 Kranzberg (DE)
(74) Vertreter: Witte, Alexander, Dr.-Ing.

(57) **Zusammenfassung**

Ein Verfahren und eine Vorrichtung dienen zum Spritzgießen von z.B. aus mehreren Komponenten (71, 72) bestehenden Kunststoffartikeln (70). Eine Spritzgießmaschine (10) ist mit einem Werkzeug, z.B. einem Etagenwerkzeug (12) versehen. Das Werkzeug ist in unterschiedlichen Bereichen unterschiedlich temperierbar. Ein Mittelpaket (13) des Etagenwerkzeugs (12) arbeitet auf einer ersten Seite (14) über eine erste Trennebene (I) mit einer ersten Werkzeughälfte (15) und auf einer zweiten Seite (16) über eine zweite Trennebene (II) mit einer zweiten Werkzeughälfte (17) zusammen. Das Etagenwerkzeug (12) weist eine Mehrzahl von ersten, kleineren Formhohlräumen (30a - 30d) sowie eine Mehrzahl von zweiten, größeren Formhohlräumen (32a - 32d) auf. Es sind Mittel (26, 27) zum Spritzgießen vorgesehen. Diese spritzgießen erste Komponenten (71) des Kunststoffartikels (70) in in der ersten Trennebene (I) befindliche erste Formhohlräume (30a - 30d) und zweite Komponenten (72) auf die ersten Komponenten (71) in zweiten Formhohlräumen (32a - 32d). Ein Handlingsystem (40) entformt die ersten Komponenten (71) aus den ersten Formhohlräumen (30a - 30d), überführt diese aus der ersten Trennebene (I) in die zweite Trennebene (II), legt die ersten Komponenten (71) in die zweiten Formhohlräume (32a- 32d) ein, und entformt die Kunststoffartikel (70) aus den zweiten Formhohlräumen (32a - 32d). Alle ersten Hohlräume (30a - 30d) sind in der ersten Trennebene (I) und alle zweiten Hohlräumen (32a - 32d) in der zweiten Trennebene (II) angeordnet. Das Handlingsystem (40) weist z.B. mindestens zwei Arme (45, 46) auf, die im wesentlichen unabhängig voneinander in die erste (I) und in die zweite (II) Trennebene einfahrbar sind (Fig. 1).

## Beschreibung

Die Erfindung betrifft ein Verfahren zum Spritzgießen von aus mehreren Komponenten bestehenden Kunststoffartikeln mit den Schritten:
a) Bereitstellen einer Spritzgießmaschine mit einem Etagenwerkzeug, bei dem ein Mittelpaket auf einer ersten Seite über eine erste Trennebene mit einer ersten Werkzeughälfte und auf einer zweiten Seite über eine zweite Trennebene mit einer zweiten Werkzeughälfte zusammenarbeitet, wobei das Etagenwerkzeug eine Mehrzahl von ersten, kleineren Formhohlräumen sowie eine Mehrzahl von zweiten, größeren Formhohlräumen aufweist;
b) Spritzgießen der ersten Komponenten der Kunststoffartikel in den in der ersten Trennebene befindlichen ersten Formhohlräumen;
c) Entformen der ersten Komponenten aus den ersten Formhohlräumen;
d) Überführen der ersten Komponenten aus der ersten Trennebene in die zweite Trennebene;
e) Einlegen der ersten Komponenten in die zweiten Formhohlräume;
f) Spritzgießen der zweiten Komponenten auf die ersten Komponenten in den zweiten Formhohlräumen;
g) Entformen der Kunststoffartikel aus den zweiten Formhohlräumen.

Die Erfindung betrifft weiterhin eine Vorrichtung zum Spritzgießen von aus mehreren Komponenten bestehenden Kunststoffartikeln mit:
a) einer Spritzgießmaschine mit einem Etagenwerkzeug, bei dem ein Mittelpaket auf einer ersten Seite über eine erste Trennebene mit einer ersten Werkzeughälfte und auf einer zweiten Seite über eine zweite Trennebene mit einer zweiten Werkzeughälfte zusammenarbeitet, wobei das Etagenwerkzeug eine Mehrzahl von ersten, kleineren Formhohlräumen sowie eine Mehrzahl von zweiten, größeren Formhohlräumen aufweist;
b) Mitteln zum Spritzgießen
   - von ersten Komponenten des Kunststoffartikels in den in der ersten Trennebene befindlichen ersten Formhohlräumen, und
   - von zweiten Komponenten auf die ersten Komponenten in den zweiten Formhohlräumen;
c) einem Handlingsystem zum
   - Entformen der ersten Komponenten aus den ersten Formhohlräumen,
   - Überführen der ersten Komponenten aus der ersten Trennebene in die zweite Trennebene,
   - Einlegen der ersten Komponenten in die zweiten Formhohlräume, und
   - Entformen der Kunststoffartikel aus den zweiten Formhohlräumen.

Ein Verfahren und eine Vorrichtung der vorstehend genannten Art sind aus der DE 197 49 245 bekannt.

Die Erfindung betrifft weiterhin ein Verfahren zum Spritzgießen von Kunststoffartikeln in einer Spritzgießmaschine mit einem Werkzeug, bei dem mindestens eine erste Werkzeughälfte über mindestens eine Trennebene mit mindestens einer zweiten Werkzeughälfte zusammenarbeitet.

Schließlich betrifft die Erfindung noch eine Vorrichtung zum Spritzgießen von Kunststoffartikeln in einer Spritzgießmaschine mit einem Werkzeug, bei dem mindestens eine erste Werkzeughälfte über mindestens eine Trennebene mit mindestens einer zweiten Werkzeughälfte zusammenarbeitet.

Ein Verfahren und eine Vorrichtung der zuletzt genannten Art sind allgemein bekannt.

In der Technik des Kunststoff-Spritzgießens ist es bekannt, Kunststoffartikel aus mehreren Komponenten herzustellen. Diese mehreren Komponenten können z.B. aus unterschiedlichen Kunststoffen bestehen, um unterschiedlichen Anforderungen in verschiedenen Oberflächenbereichen des fertigen Kunststoffartikels Rechnung zu tragen. Für die verschiedenen Komponenten können aber auch an sich gleiche Kunststoffe verwendet werden, die unterschiedlich eingefärbt sind. Auf diese Weise lassen sich mehrfarbige Kunststoffartikel herstellen.

Zur Herstellung derartiger Mehrkomponenten-Kunststoffartikel sind unterschiedliche Verfahren und Vorrichtungen eingesetzt worden. So ist es z.B. bekannt, in einem Spritzgießwerkzeug unterschiedliche Formhohlräume bzw. zwei Gruppen unterschiedlich geformter Formhohlräume vorzusehen. In den kleineren Formhohlräumen wird zunächst die eine Komponente des Kunststoffartikels durch Spritzgießen hergestellt. Man kann nun diese eine Komponente entweder in den größeren Hohlraum umsetzen oder durch Verfahren des Werkzeugs oberhalb der soeben hergestellten ersten Komponente einen weiteren Hohlraum herstellen. Jedenfalls wird in einem weiteren Verfahrensschritt die zweite Komponente des Kunststoffartikels unmittelbar auf die erste Komponente aufgespritzt, so daß zwischen beiden Komponenten eine innige Verbindung entsteht.

Es sei an dieser Stelle betont, daß die Erfindung keinesfalls auf das Gebiet der Herstellung von Mehrkomponenten-Kunststoffartikeln beschränkt ist. Vielmehr kann die Erfindung mit Vorteil auch bei allgemeinen Anwendungen angesetzt werden, solange es nur auf Bereiche unterschiedlicher Temperierung ankommt. Entsprechendes gilt für den Einsatz von Etagenwerkzeugen, was im Rahmen der vorliegenden Anmeldung ebenfalls nur beispielhaft zu verstehen ist.

Aus der EP 0 903 213 A2 sind unterschiedliche Vorrichtungen und Verfahren zum Herstellen derartiger Kunststoffartikel bekannt. Dabei wird jedoch einheitlich eine Technik verwendet, bei der ein Arm eines Handlingsystems oder Roboters quer zwischen Werkzeughälften eines sich im geöffneten Zustand befindlichen Spritzgießwerkzeugs einfährt, um dann mittels geeigneter Greifelemente die Komponenten im Werkzeug umzusetzen und um fertige Kunststoffartikel aus dem Werkzeug zu entnehmen. Bei einem der dabei dargestellten und beschriebenen Ausführungsbeispiele (Fig. 14A bis 14L) wird zu diesem Zweck ein Etagenwerkzeug verwendet. Unter einem Etagenwerkzeug versteht man ein mindestens dreiteiliges Spritzgießwerkzeug, dessen mittleres Teil als Mittelpaket bezeichnet wird, auf dessen beiden gegenüberliegenden Seiten sich je eine weitere Werkzeughälfte befindet. Auf diese Weise hat ein Etagenwerkzeug mindestens zwei Trennebenen, nämlich beidseits des Mittelpakets im Übergang zu den beiden seitlichen Werkzeughälften.

Bei der bekannten Vorrichtung ist in jeder Trennebene sowohl ein kleinerer wie auch ein größerer Formhohlraum vorgesehen. Die beiden kleineren Formhohlräume dienen dabei in der bereits erwähnten Weise zur Herstellung der ersten Komponenten des Kunststoffartikels. Die ersten Komponenten werden nach ihrer Herstellung in den größeren Hohlraum umgesetzt und füllen diesen etwa zur Hälfte aus. Die zweite Komponente kann dann in dem größeren Formhohlraum unmittelbar auf die erste Komponente aufgespritzt werden.

Zum Umsetzen der Komponenten und zur Entnahme der fertigen Kunststoffartikel dient der bereits erwähnte Roboterarm. Dieser ist quer in die eine oder die andere Trennebene einfahrbar und kann darüber hinaus parallel zur Öffnungs- bzw. Schließrichtung des Werkzeugs verfahren werden, so daß er einmal mit der einen und das andere Mal mit der anderen Trennebene fluchtet.

Beim Überführen der ersten Komponente aus dem kleineren Formhohlraum in den größeren Formhohlraum findet bei dieser bekannten Vorrichtung ein Wechsel der Trennebene statt. Es wird also immer die in der einen Trennebene hergestellte erste Komponente in den größeren Formhohlraum in der anderen Trennebene überführt. Zum Ausführen dieser Überführungen ist der Roboterarm an seinem freien Ende mit einer Haltevorrichtung versehen. Diese Haltevorrichtung weist auf beiden Seiten jeweils zwei Greifer für Komponenten oder Werkstücke auf, z.B. Saugnäpfe. Die beiden Halter auf beiden Seiten sind gerade so weit voneinander beabstandet wie der kleine vom großen Formhohlraum in den beiden Trennebenen des Werkzeugs. Um eine in der Mitte zwischen diesen beiden Greifern liegende Achse, die parallel zur Öffnungs- bzw. Schließrichtung des Werkzeugs verläuft, ist die Haltevorrichtung um 180° schwenkbar. Die bekannte Vorrichtung mit dem zugehörigen Verfahren hat zwei wesentliche Nachteile.

Der erste Nachteil besteht darin, daß in jeder Trennebene sowohl ein großer wie auch ein kleiner Formhohlraum vorhanden ist. Dies erfordert eine komplizierte Temperaturführung im Bereich beider Trennebenen. Bekanntlich muß man nämlich Spritzgießwerkzeuge während des Betriebes kühlen bzw. temperieren, um optimale Ergebnisse zu erzielen. Die Anforderungen an eine solche Temperierung sind jedoch sehr unterschiedlich, je nachdem, wie groß das Volumen des Formhohlraums ist, weil die Wärmezufuhr durch das Einspritzen einer größeren oder kleineren Menge an flüssiger und damit sehr warmer Kunststoffmasse bei unterschiedlichen Volumina der Formhohlräume sehr unterschiedlich ist.

Der zweite Nachteil besteht darin, daß aufgrund des notwendigen Hin- und Herfahrens des Roboterarms zwischen den beiden Trennebenen ein erheblicher Steuerungsaufwand erforderlich ist und vor allem relativ lange Verfahrzeiten in Kauf genommen werden müssen. Dies ist jedoch bei modernen Kunststoff-Spritzgießmaschinen äußerst unerwünscht, weil die Ausbringung, d.h. die Produktivität einer Kunststoff-Spritzgießmaschine, weitgehend von der Zykluszeit abhängt. Die Zykluszeit wird jedoch in großem Ausmaß von den Verfahrzeiten der Handlingsysteme, im vorliegenden Fall also des Roboterarms entlang der beiden notwendigen Achsen bestimmt. Bei der bekannten Vorrichtung kommt insoweit noch erschwerend hinzu, daß das Etagenwerkzeug zum Einfahren in die eine Trennebene zunächst nur im Bereich der einen Trennebene geöffnet wird, während das Werkzeug entlang der zweiten Trennebene solange noch geschlossen ist. Erst beim Einfahren in die zweite Trennebene wird das Werkzeug in dieser zweiten Trennebene geöffnet, ist dann aber im Bereich der ersten Trennebene wieder geschlossen. Dies bedingt einen sehr komplizierten Steuerungsablauf im Bereich des Werkzeugs, was in noch höherem Maße unerwünscht ist, weil das Werkzeug infolge seiner sehr trägen Masse nur relativ langsam verfahren werden kann, jedenfalls wesentlich langsamer als die beweglichen Komponenten eines Handlingsystems.

Aus der eingangs genannten DE 197 49 245 C1 sind ein Verfahren und eine Vorrichtung zum Spritzgießen von Codekarten bekannt. Die Codekarten enthalten eine Spule. Bei der Herstellung der Codekarten wird eine erste Kartenhälfte in einem ersten Formhohlraum spritzgegossen. Die Spule wird an der ersten Kartenhälfte angebracht. Nach Überführen der ersten Kartenhälfte vom ersten Formhohlraum in einen zweiten Formhohlraum wird eine zweite Kartenhälfte auf die erste Kartenhälfte aufgespritzt, derart, daß die Spule zwischen den beiden Kartenhälften eingebettet ist. In allgemeinerer Hinsicht wird dabei auch beschrieben, auf diese Weise Kunststoffartikel zwischen zwei Hälften mit Gegenständen zu versehen oder dort zu bearbeiten. Weiterhin ist (Fig. 23) ein Anwendungsfall beschrieben, bei dem die Herstellung in einem Etagenwerkzeug erfolgt. Im offenen Zustand des Etagenwerkzeugs fährt ein gabelartiger Handlingarm zwischen die beiden Zwischenräume ein, die zwischen dem Mittelpaket einerseits und den beiden seitlichen Werkzeughälften andererseits offenstehen. Der Handlingarm entnimmt die ersten Kartenhälften auf der einen Seite und überführt sie zu einer Anbringstation. Nach dem Anbringvorgang werden die ersten Kartenhälften auf den anderen Handlingarm überführt und bei erneutem Einfahren des Handlingarms in der zweiten Trennebene in dort vorhandene, größere Formhohlräume eingesetzt.

Der Erfindung liegt demgegenüber die Aufgabe zugrunde, ein Verfahren und eine Vorrichtung der eingangs genannten Art dahingehend weiterzubilden, daß die genannten Nachteile vermieden werden. Insbesondere soll es die Erfindung ermöglichen, den konstruktiven Aufbau des Spritzgießwerkzeugs zu vereinfachen, die Verfahrensabläufe zu beschleunigen und damit die Zykluszeiten zu verkürzen. Weiterhin soll die Prozeßsicherheit ebenso wie die Qualität der hergestellten Kunststoffartikel erhöht werden.

Bei einem ersten Verfahren der eingangs genannten Art wird die Aufgabe erfindungsgemäß dadurch gelöst, daß das Etagenwerkzeug im Bereich der ersten Trennebene und im Bereich der zweiten Trennebene unterschiedlich temperiert wird.

Bei einem zweiten Verfahren der eingangs genannten Art wird die Aufgabe erfindungsgemäß dadurch gelöst, daß die Schritte c), e) und g) im wesentlichen unabhängig voneinander durchgeführt werden.

Bei dem dritten Verfahren der eingangs genannten Art wird die Aufgabe erfindungsgemäß dadurch gelöst, daß das Werkzeug in unterschiedlichen Bereichen der mindestens einen Trennebene unterschiedlich temperiert wird.

Bei einer ersten Vorrichtung der eingangs genannten Art wird die Aufgabe erfindungsgemäß dadurch gelöst, daß das Etagenwerkzeug im Bereich der ersten Trennebene und im Bereich der zweiten Trennebene mit Aggregaten zum unterschiedlichen Temperieren versehen ist.

Bei einer zweiten Vorrichtung der eingangs genannten Art wird die Aufgabe erfindungsgemäß dadurch gelöst, daß das Handlingsystem mindestens zwei Arme aufweist, die im wesentlichen unabhängig voneinander in die erste und in die zweite Trennebene einfahrbar sind.

Schließlich wird bei der dritten eingangs genannten Vorrichtung die Aufgabe erfindungsgemäß dadurch gelöst, daß Mittel vorgesehen sind, um das Werkzeug in unterschiedlichen Bereichen der mindestens einen Trennebene unterschiedlich zu temperieren.

Die der Erfindung zugrunde liegende Aufgabe wird dadurch vollkommen gelöst.

Wenn nämlich z.B. alle ersten Hohlräume in der ersten Trennebene und alle zweiten Hohlräume in der zweiten Trennebene angeordnet sind, und eine Temperierung in der erwähnten Weise vorgenommen wird, so ist eine wesentlich einfachere Temperaturführung im Werkzeug erzielbar. Dann kann man nämlich die eine Trennebene hinsichtlich der Temperierung auf die kleineren Formhohlräume und die andere Trennebene auf die größeren Formhohlräume optimieren. Dadurch werden auch die Massen im Werkzeug kleiner, und es sind höhere Verfahrgeschwindigkeiten mit einer daraus resultierenden kürzeren Zykluszeit erzielbar.

Infolge des unabhängigen Durchführens mehrerer Schritte, insbesondere durch Verwendung eines Handlingsystems mit mindestens zwei gleichzeitig einfahrbaren Armen, wird darüber hinaus der Bewegungsablauf vereinfacht und gleichfalls verkürzt, so daß auch dies der angestrebten Verkürzung der Zykluszeit zugute kommt.

Insgesamt bewirkt die Erfindung daher, daß bei der Herstellung von aus mehreren Komponenten bestehenden Kunststoffartikeln in einem Etagenwerkzeug gegenüber dem Stand der Technik eine deutliche Vereinfachung in apparativer Hinsicht, aber auch im Hinblick auf den Bewegungsablauf erreicht wird, so daß insgesamt die Zykluszeit deutlich vermindert werden kann.

Die Erfindung hat ferner hat den Vorteil, daß infolge der unterschiedlichen Temperierung den unterschiedlichen Größen der Formhohlräume in den Trennebenen optimal Rechnung getragen werden kann. Dies kommt nicht nur einer Erhöhung der Qualität der hergestellten Kunststoffartikel zugute, sondern führt im Bereich derjenigen Trennebene, bei der ein einfacheres Temperiersystem ausreicht, zu einer Verminderung des Aufwandes und damit einer Reduzierung der zu bewegenden Gewichte.

Die Erfindung hat schließlich den Vorteil, daß dann, wenn die Arme unabhängig voneinander verfahrbar sind, eine weitgehende Individualisierung möglich ist, also beispielsweise unterschiedlich konfigurierte Anordnungen von Formhohlräumen in den beiden Trennebenen individuell angefahren werden können.

Bei einer bevorzugten Weiterbildung des erfindungsgemäßen Verfahrens zum Spritzgießen von aus mehreren Komponenten bestehenden Kunststoffartikeln wird zunächst eine erste Komponente durch Spritzgießen hergestellt und dann eine zweite Komponente an die erste Komponente gespritzt, wobei die zweite Komponente die erste Komponente im wesentlichen umhüllt.

Diese Maßnahme hat z.B. den Vorteil, daß dickwandige Artikel zuverlässig gespritzt werden können, indem zunächst ein "Kern" und dann schalenartig eine oder mehrere Umhüllungen um den Kern herumgespritzt werden. Es entstehen dabei nicht die sonst bei dickwandigen Artikeln auftretenden Probleme, insbesondere hinsichtlich des Abkühlens oder sogar des Wiederanschmelzens von Oberflächenbereichen.

Bei einer bevorzugten Weiterbildung dieses Ausführungsbeispiels ist die erste Komponente im wesentlichen zylindrisch, und die zweite Komponente umgibt die erste Komponente nach Art eines Zylindermantels. Alternativ kann aber auch vorgesehen sein, daß die zweite Komponente die erste Komponente durchdringt.

Diese Maßnahmen haben den Vorteil, daß komplexe, insbesondere dickwandige Artikel hergestellt werden können, die z.B. aus zwei oder mehr unterschiedlichen Kunststoffen und/oder aus Kunststoffen unterschiedlicher Farbe hergestellt sein können.

Besonders bevorzugt ist ein Ausführungsbeispiel einer erfindungsgemäßen Vorrichtung, bei der das Handlingsystem einen Roboter mit zwei Armen aufweist, wobei die Arme bei geöffnetem Etagenwerkzeug im wesentlichen quer zur Öffnungsrichtung des Etagenwerkzeugs in Zwischenräume zwischen dem Mittelpaket und der ersten bzw. zweiten Werkzeughälfte einfahrbar sind und sich im wesentlichen in Einfahrrichtung erstrecken.

Diese Maßnahmen haben den Vorteil, daß eine deutliche zeitliche Verkürzung der notwendigen Überführungsschritte im Spritzgießwerkzeug möglich ist, weil das Werkzeug gleichzeitig im Bereich beider Trennebenen geöffnet wird und das Handlingsystem in beide Trennebenen simultan einfährt, um dann die erforderlichen Umsetzungen vorzunehmen. Ein Verfahren des Handlingsystems parallel zur Öffnungsrichtung des Werkzeugs ist damit nicht erforderlich.

In jedem Fall ist erfindungsgemäß bevorzugt, wenn bei der Vorrichtung ein in die erste Trennebene einfahrbarer erster Arm einseitig und ein in die zweite Trennebene einfahrbarer zweiter Arm beidseitig mit Aufnahmen für erste Komponenten bzw. Kunststoffartikel versehen sind.

Diese Maßnahmen haben den Vorteil, daß der zu treibende Aufwand so weit wie möglich auch im Bereich der notwendigen Aufnahmen minimiert worden ist, weil die genannte Konfiguration ausreicht, um sämtliche Überführungsschritte durchführen und die fertigen Kunststoffartikel auch aus dem Spritzgießwerkzeug entnehmen zu können.

Bei einer Weiterbildung dieser Variante weist der zweite Arm zwei Teilarme auf, wobei die Aufnahmen des zweiten Armes auf voneinander weg weisenden Seiten der Teilarme angeordnet sind.

Diese Maßnahme hat den Vorteil, daß für die in beide Richtungen orientierten Aufnahmen gleiche Komponenten in Gestalt der beiden Teilarme verwendet werden können, die lediglich umgekehrt orientiert an dem einen Arm angeordnet werden müssen.

Bei einer weiteren Variante ist die Vorrichtung dadurch gekennzeichnet, daß eine Transferstation zum Umsetzen der ersten Komponenten aus den Aufnahmen des ersten Armes in Aufnahmen des zweiten Armes vorgesehen ist.

Diese Maßnahme hat den Vorteil, daß der Roboter mit den Armen in dieser Phase stehenbleiben kann, also ein Verfahren parallel zur Öffnungsrichtung des Werkzeugs nicht erforderlich ist. Es ist lediglich eine relativ leichte und damit schnell verfahrbare Transferstation erforderlich, mit der das Umsetzen der Komponenten schnell und sicher bewirkt werden kann.

Dies gilt insbesondere dann, wenn die Transferstation quer zu den Seiten der Arme verfahrbar ist, wobei weiterhin bevorzugt ist, wenn die Transferstation in einer Ruhestellung seitlich neben dem ersten Arm angeordnet ist, wobei dann die ersten Komponenten vom ersten Arm auf die Transferstation direkt übergebbar sind.

Eine besonders gute Wirkung wird in diesem Falle dadurch erzielt, daß der erste Arm nach der Übergabe der ersten Komponenten aus der Bewegungsbahn der Transferstation bringbar und die Transferstation in eine Stellung neben dem zweiten Arm bewegbar ist.

Auch diese Maßnahme hat den Vorteil, daß durch einen minimalen Bewegungsablauf, d.h. eine Bewegung nur der unbedingt notwendigen Komponenten, ein möglichst schneller Verfahrensablauf möglich ist.

Bei einer anderen Variante der Erfindung kann hingegen auch vorgesehen sein, daß der Roboter um eine zur Einfahrrichtung parallele Achse drehbar ist, derart, daß nach erfolgter Drehung der erste Arm mit der zweiten Trennebene und der zweite Arm mit der ersten Trennebene fluchtet.

Diese Variante ist dann von Vorteil, wenn sich je nach Auslegung der Spritzgießmaschine und des Handlingsystems in bezug auf die herzustellenden Artikel insoweit Dynamikvorteile ergeben.

Bevorzugt ist bei diesem Ausführungsbeispiel, wenn der zweite Arm um eine zur Einfahrrichtung parallele Achse drehbar ist.

Diese Maßnahme hat den Vorteil, daß ebenfalls ein schnelles Umsetzen im Bereich des zweiten Armes möglich ist.

Insgesamt ist bei der erfindungsgemäßen Vorrichtung bevorzugt, wenn ein Förderer zum Abfördern der Kunststoffartikel im Bereich des zweiten Armes vorgesehen ist.

Diese Maßnahme hat den Vorteil, daß die Kunststoffartikel unmittelbar dort, wo sie aus dem Werkzeug entnommen worden sind, auf den Förderer übergeben und dann schnellstmöglich abgefördert werden können.

Je nach Konfiguration des Roboters sind dabei die Kunststoffartikel vom zweiten Arm auf der vom ersten Arm abgewandten Seite auf den Förderer überführbar oder vom zweiten Arm auf der dem ersten Arm zugewandten Seite.

Weitere Vorteile ergeben sich aus der Beschreibung und der beigefügten Zeichnung.

Es versteht sich, daß die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ausführungsbeispiele der Erfindung sind in der Zeichnung dargestellt und werden in der nachfolgenden Beschreibung näher erläutert. Es zeigen:
- Fig. 1A: eine äußerst schematisierte Draufsicht auf ein Ausführungsbeispiel einer erfindungsgemäßen Vorrichtung zum Spritzgießen von aus mehreren Komponenten bestehenden Kunststoffartikeln, auf der das erfindungsgemäße Verfahren durchführbar ist;
- Fig. 1B: in wesentlich vergrößertem Maßstab eine Seitenansicht, im Schnitt, auf einen aus mehreren Komponenten bestehenden Kunststoffartikel;
- Fig. 2: in weiter schematisierter Weise die Vorrichtung gemäß Fig. 1A in einer ersten Betriebsstellung;
- Fig. 3: eine Darstellung, ähnlich Fig. 2, jedoch in einer zweiten Betriebsstellung;
- Fig. 4: eine Darstellung, ähnlich Fig. 2, jedoch in einer dritten Betriebsstellung;
- Fig. 5: eine Darstellung, ähnlich Fig. 2, jedoch in einer vierten Betriebsstellung;
- Fig. 6: eine Darstellung, ähnlich Fig. 2, jedoch in einer fünften Betriebsstellung;
- Fig. 7: eine Darstellung, ähnlich Fig. 2, jedoch in einer sechsten Betriebsstellung;
- Fig. 8: eine Darstellung, ähnlich Fig. 2, jedoch in einer siebten Betriebsstellung;
- Fig. 9: eine Darstellung, ähnlich Fig. 2, jedoch für ein weiteres Ausführungsbeispiel einer erfindungsgemäßen Vorrichtung;
- Fig. 10: eine Darstellung, ähnlich Fig. 2, jedoch für ein noch weiteres Ausführungsbeispiel einer erfindungsgemäßen Vorrichtung;
- Fig. 11: eine Darstellung ähnlich Fig. 1A und 1B, jedoch für einen weiteren Kunststoffartikel, bei dem eine zweite Komponente eine erste Komponente zylindermantelartig umschließt;
- Fig. 12: eine Darstellung ähnlich Fig. 11, jedoch für einen anderen Kunststoffartikel, bei dem eine zweite Komponente eine erste Komponente durchdringt.

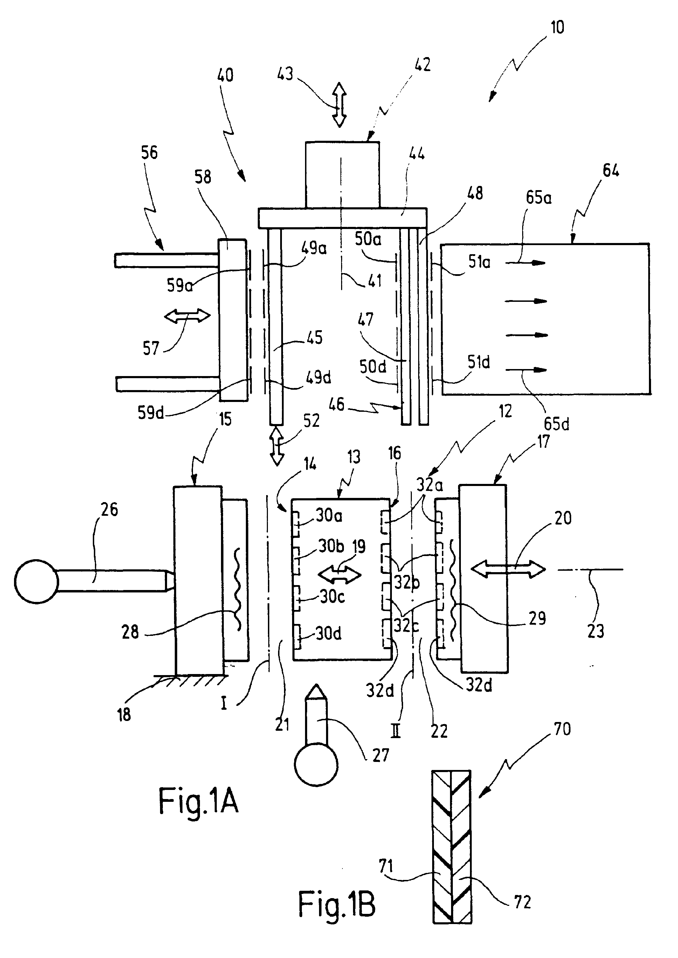

In Fig. 1A ist mit dem Bezugszeichen 10 eine Kunststoff-Spritzgießmaschine zum Herstellen von aus mehreren Komponenten bestehenden Kunststoffartikeln schematisch dargestellt.

Es darf auch an dieser Stelle betont werden, daß die Erfindung keineswegs auf das Anwendungsgebiet der Herstellung von Mehrkomponenten-Kunststoffartikeln beschränkt ist. Vielmehr kann die Erfindung in vorteilhafter Weise ganz allgemein auf dem Sektor des Kunststoff-Spritzgießens eingesetzt werden, sofern nicht ausdrücklich etwas anderes angegeben ist. Die Erfindung ist weiterhin nicht auf bestimmte Kunststoff-Spritzgießmaschinen oder bestimmte darin verwendete Werkzeuge beschränkt, also beispielsweise nicht auf die Verwendung von Etagenwerkzeugen, sofern nicht im Rahmen der vorliegenden Erfindung ausdrücklich etwas anderes angegeben ist.

Die Spritzgießmaschine 10 umfaßt ein Etagenwerkzeug 12, das in Fig. 1A im geöffneten Zustand dargestellt ist. Das Etagenwerkzeug 12 umfaßt ein Mittelpaket 13. Dessen erste, in Fig. 1A linke Seite 14 grenzt an eine erste Werkzeughälfte 15. Die in Fig. 1A rechte, zweite Seite 16 des Mittelpakets 13 grenzt hingegen an eine zweite Werkzeughälfte 17. Zwischen dem Mittelpaket 13 und der ersten Werkzeughälfte 15 entsteht auf diese Weise eine erste Trennebene I. In entsprechender Weise entsteht eine zweite Trennebene II zwischen dem Mittelpaket 13 und der zweiten Werkzeughälfte 17.

Wie man aus Fig. 1A weiter erkennt, ist die erste Werkzeughälfte 15 an ein Fundament 18 angeschlossen, also raumfest. Mit einem kürzeren Pfeil 19 im Mittelpaket 13 und einem längeren Pfeil 20 in der zweiten Werkzeughälfte 17 ist angedeutet, daß das Mittelpaket 13 und die zweite Werkzeughälfte 17 gegenüber der festen, ersten Werkzeughälfte 15 verfahrbar sind. In der Regel wird die zweite Werkzeughälfte 17 mit doppelter Verfahrgeschwindigkeit verfahren, verglichen mit dem Mittelpaket 13, so daß sich das Etagenwerkzeug 12 im Bereich der Trennebenen I und II gleichmäßig öffnet. Die dort entstehenden Zwischenräume sind im Bereich der ersten Trennebene I mit 21 und im Bereich der zweiten Trennebene II mit 22 bezeichnet. Das Bezugszeichen 23 kennzeichnet eine erste Achse, die mit der Öffnungs- und Schließrichtung des Etagenwerkzeugs 12 zusammenfällt.

Ein erstes Spritzgießaggregat 26, d.h. ein Plastifizierzylinder herkömmlicher Bauart mit zugehörigen Nebenaggregaten, ist an die erste Werkzeughälfte 15 angeschlossen. Diese Anordnung ist üblicherweise fest. Ein zweites Spritzgießaggregat 27 ist an das Mittelpaket 13 anschließbar, wobei die Verbindung zwischen zweitem Spritzgießaggregat 27 und Mittelpaket 13 stets neu hergestellt werden muß, wenn das Etagenwerkzeug 12 wieder geschlossen wurde. Über die Spritzgießaggregate 26 und 27 können z.B. unterschiedliche Kunststoffe oder auch gleiche Kunststoffe unterschiedlicher Farbe zugeführt werden.

Mit 28 ist noch ein erstes Temperieraggregat im Bereich der ersten Werkzeughälfte 15 angedeutet, während das Bezugszeichen 29 ein zweites Temperieraggregat in der zweiten Werkzeughälfte 17 bezeichnet.

Die Temperieraggregate 28 und 29 dienen zum Temperieren, d.h. zum gesteuerten Anwärmen oder Abkühlen des Etagenwerkzeugs 12 im Bereich der darin vorgesehenen Formhohlräume.

Es darf an dieser Stelle daran erinnert werden, daß die Temperieraggregate 28 und 29 in diesem Zusammenhang nur beispielhaft in ihrer Verwendung im Etagenwerkzeug 12 erwähnt sind. Entsprechende Temperieraggregate können selbstverständlich auch bei anderen Bauarten von Etagenwerkzeugen verwendet werden, also bei Etagenwerkzeugen, die aus fünf oder mehr Werkzeugteilen bestehen. Darüber hinaus schließt die Erfindung aber auch die Verwendung von Aggregaten zum unterschiedlichen Temperieren in ganz allgemeiner Form ein, also z.B. auch bei Werkzeugen, die nur aus zwei Werkzeughälften bestehen.

Mit 30a bis 30d sind in Fig. 1A erste Formhohlräume bezeichnet. Diese befinden sich auf der ersten Seite 14 des Mittelpakets 13. Die erste Werkzeughälfte 15 ist auf der gegenüberliegenden Oberfläche eben, also nicht mit eigenen Formhohlräumen versehen.

Demgegenüber sind mit 32a bis 32d zweite Formhohlräume bezeichnet, die auf der zweiten Seite 16 des Mittelpakets 13 in Verbindung mit der gegenüberliegenden Oberfläche der zweiten Werkzeughälfte 17 gebildet werden. Die zweiten Formhohlräume 32a bis 32d werden z.B. durch jeweils zwei gleich große Formhohlraumhälften jeweils in der zweiten Seite 16 und der gegenüberliegenden Oberfläche der zweiten Werkzeughälfte 17 gebildet. Die resultierenden zweiten Formhohlräume 32a bis 32d haben in der zweiten Trennebene II die gleiche Querschnittsfläche wie die ersten Formhohlräume 30a bis 30d in der ersten Trennebene I, sie sind jedoch tiefer, im Volumen also größer.

Es versteht sich, daß die vorstehend erläuterte Anordnung der Formhohlräume 30a bis 30d und 32a bis 32d nur beispielhaft zu verstehen ist. Wichtig ist allein, daß zwei Gruppen von jeweils gleich großen Formhohlräumen vorhanden sind, wobei sich die Formhohlräume der einen Größe alle in der einen Trennebene und die Formhohlräume der anderen Größe alle in der anderen Trennebene befinden.

Zur Spritzgießmaschine 10 gehört ferner ein insgesamt mit dem Bezugszeichen 40 gekennzeichnetes Handlingsystem.

Das Handlingsystem 40 ist als Ganzes entlang einer zweiten Achse 41 verfahrbar. Die zweite Achse 41 verläuft quer zur ersten Achse 23. Vorzugsweise verlaufen beide Achsen 23 und 41 horizontal, es ist jedoch auch eine andere Anordnung denkbar, bspw. in der Weise, daß die erste Achse 23 horizontal und die zweite Achse 41 vertikal verläuft.

Das Handlingsystem 40 umfaßt einen verfahrbaren Roboter 42, dessen Verfahrrichtung in der zweiten Achse 41 liegt. Dies ist in Fig. 1A mit einem Doppelpfeil 43 angedeutet.

Der Roboter 42 enthält eine sich vorzugsweise quer zur zweiten Achse 41 erstreckende Platte 44. Von der Platte 44 stehen auf das Etagenwerkzeug 12 zu gerichtet ein erster Arm 45 sowie ein zweiter Arm 46 ab. Der zweite Arm 46 umfaßt dabei vorzugsweise einen ersten Teilarm 47 sowie einen zweiten Teilarm 48. Die beiden Teilarme 47 und 48 liegen parallel zueinander und dicht nebeneinander. Sie sind vorzugsweise gleich aufgebaut, jedoch um 180° zueinander verdreht, wie noch erläutert werden wird.

Auch insoweit ist darauf hinzuweisen, daß die Darstellung nur beispielhaft zu verstehen ist. Die beiden Arme 45 und 46 müssen keineswegs fest auf einer gemeinsamen Platte 44 angeordnet sein. Vielmehr ist im Rahmen der vorliegenden Erfindung besonders bevorzugt, wenn beide Arme 45 und 46 völlig unabhängig voneinander verfahrbar sind, insbesondere mit Hilfe jeweils eigener Verfahrantriebe (nicht dargestellt). Sie können aber auch auf einer gemeinsamen Platte positioniert sein, sofern sie relativ zur Platte jeweils einzeln verfahrbar sind.

Auf der in Fig. 1A linken Seite des ersten Armes 45 befinden sich vier Aufnahmeplätze 49a bis 49d. In entsprechender Weise ist der erste Teilarm 47 auf der in Fig. 1A linken Seite mit vier Aufnahmeplätzen 50a bis 50d versehen und der zweite Teilarm 48 auf der rechten Seite mit ebenfalls vier Aufnahmeplätzen 51a bis 51d. Die Aufnahmeplätze 49a bis 49d, 50a bis 50d und 51a bis 51d sind im selben Raster angeordnet. Dieses Raster entspricht der Anordnung der Formhohlräume 30a bis 30d und 32a bis 32d im Etagenwerkzeug 12. Da sich die Aufnahmeplätze 50a bis 50d und 51a bis 51d auf gegenüberliegenden Seiten der Teilarme 47 und 48 befinden, können diese, wie bereits angedeutet, untereinander gleich ausgebildet, jedoch um 180° zueinander verdreht an der Platte 44 angeordnet werden.

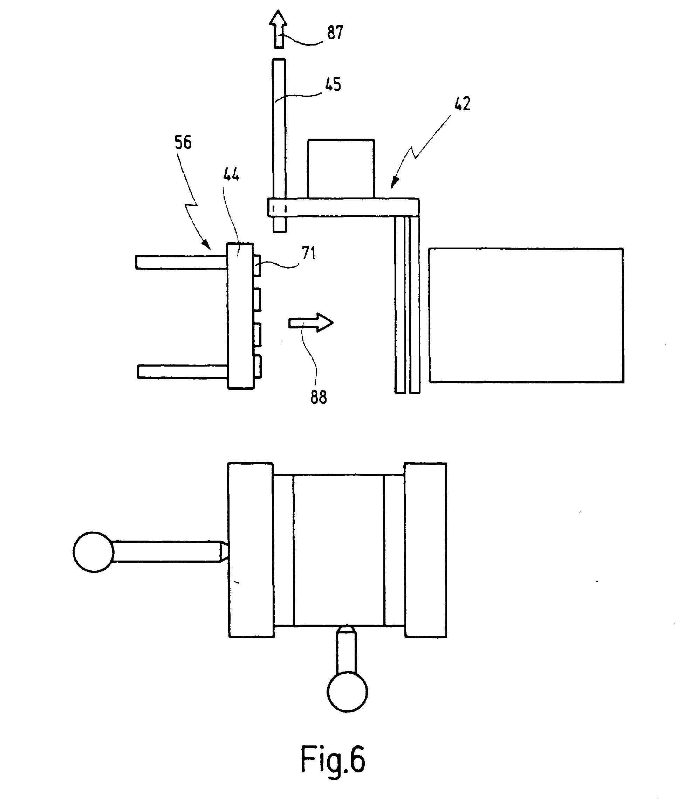

Mit einem Doppelpfeil 52 ist schließlich angedeutet, daß der erste Arm 45 in einer Richtung parallel zur zweiten Achse 41 relativ zu Platte 44 verfahrbar ist. Dies wird weiter unten anhand von Fig. 6 noch erläutert werden.

Weiterhin umfaßt das Handlingsystem 40 eine Transferstation 56.

Die Transferstation 56 ist beim Ausführungsbeispiel gemäß Fig. 1A links vom ersten Arm 45 neben dem Roboter 42 angeordnet. Die Transferstation 56 ist parallel zur ersten Achse 23, also senkrecht zur Verfahrachse 41 des Roboters 42, verfahrbar. Dies ist mit einem Doppelpfeil 57 angedeutet.

Die Transferstation 56 umfaßt eine Umsetzplatte 58, die sich parallel zu den Armen 45 und 46 erstreckt. Die Umsetzplatte 58 ist auf ihrer in Fig. 1A rechten Seite mit Aufnahmeplätzen 59a bis 59d versehen, wobei deren Raster wiederum mit dem Raster der anderen Aufnahmeplätze 49a bis 49d, 50a bis 50d und 51a bis 51d übereinstimmt.

Schließlich ist an der Spritzgießmaschine 10 noch ein Förderer 64 vorgesehen, der die fertigen Kunststoffartikel aus dem Bereich des Handlingsystems 40 abfördern soll. Der Förderer 64 ist mit Förderbahnen 65a bis 65d versehen, die wiederum in ihrem Abstand mit dem Raster der diversen Aufnahmeplätze 49, 50, 51 und 59 übereinstimmen.

In Fig. 1A sind bei der dargestellten Draufsicht jeweils vier Formhohlräume 30, 32 bzw. Aufnahmeplätze 49, 50, 51 und 59 dargestellt. Es versteht sich, daß sich vor und hinter den genannten Elementen noch weitere entsprechende Elemente befinden können, so daß sich insgesamt ein zweidimensionales Raster von bspw. 4 x 4 = 16 derartigen Elementen ergibt. Auch dies ist natürlich nur beispielhaft zu verstehen.

Schließlich zeigt Fig. 1B in stark vergrößertem Maßstab noch eine Querschnittsdarstellung eines Kunststoffartikels 70, der aus einer ersten Komponente 71 und einer zweiten Komponente 72 besteht. Fig. 1B zeigt zwar einen im wesentlichen ebenen Kunststoffartikel 70, dies ist jedoch ebenfalls beispielhaft zu verstehen.

Der Kunststoffartikel 70 kann z.B. eine erste Komponente 71 aus einem undurchsichtigen Kunststoff aufweisen. Auf die erste Komponente 71 kann dann auf der in Fig. 1B rechten Seite ein Aufdruck, Foto oder dgl. aufgebracht werden. Die zweite Komponente 72 kann dann in einem anderen, durchsichtigen Kunststoff ausgeführt werden, so daß der Aufdruck oder das Foto sichtbar sind. Auf diese Weise lassen sich verschieden dekorierte Kunststoffartikel 70 herstellen. Es versteht sich auch hier, daß die Darstellung in Fig. 1B nur beispielhaft zu verstehen ist. Selbstverständlich können die Kunststoffartikel 70 auch jedwede andere Gestalt aufweisen. Es ist auch nicht erforderlich, daß die Komponenten 71 und 72 im wesentlichen gleich groß oder gleich dick sind, weil auch stark unterschiedliche Größenverhältnisse und/oder Volumenverhältnisse vorgesehen werden können. Eine Einschränkung ist insoweit keinesfalls vorhanden.

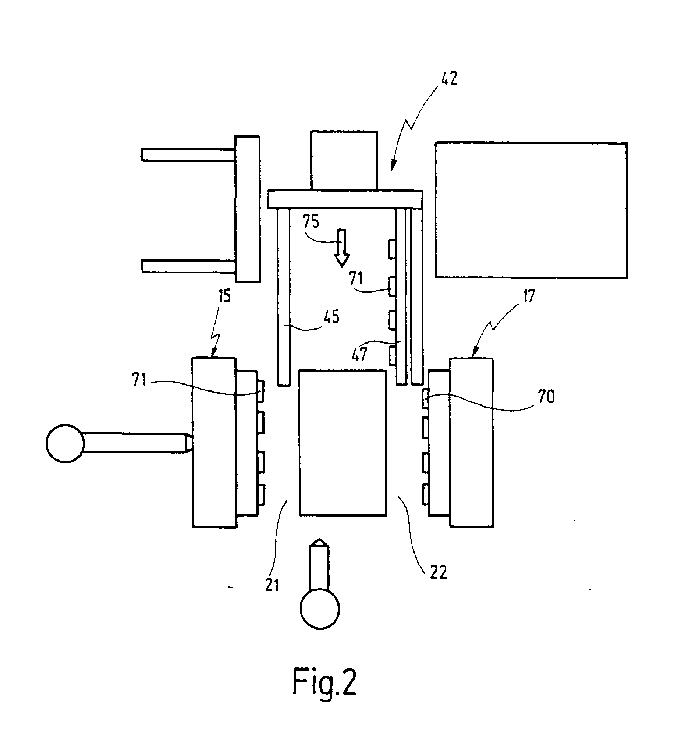

Die Wirkungsweise der in Fig. 1A dargestellten Vorrichtung soll nun anhand der in den Fig. 2 bis 8 skizzierten Betriebsstellungen erläutert werden. In den Fig. 2 bis 8 sind zu diesem Zweck lediglich die jeweils involvierten Elemente mit Bezugszeichen versehen.

In Fig. 2 hat sich der verfahrbare Roboter 42 bereits aus der Grundstellung gemäß Fig. 1A in Richtung des Pfeils 75 nach unten bewegt. Zu diesem Zeitpunkt befinden sich aus vorausgegangenen Phasen des Arbeitsablaufs erste Komponenten 71 auf der Oberfläche der ersten Werkzeughälfte 15. Weitere erste Komponenten 71 sind auf der linken Seite des ersten Teilarms 47 angeordnet, und zwar mittels der dort befindlichen Aufnahmeplätze 50a bis 50d. Schließlich befinden sich zu diesem Zeitpunkt in der zweiten Werkzeughälfte 17 bereits fertige Kunststoffartikel 70.

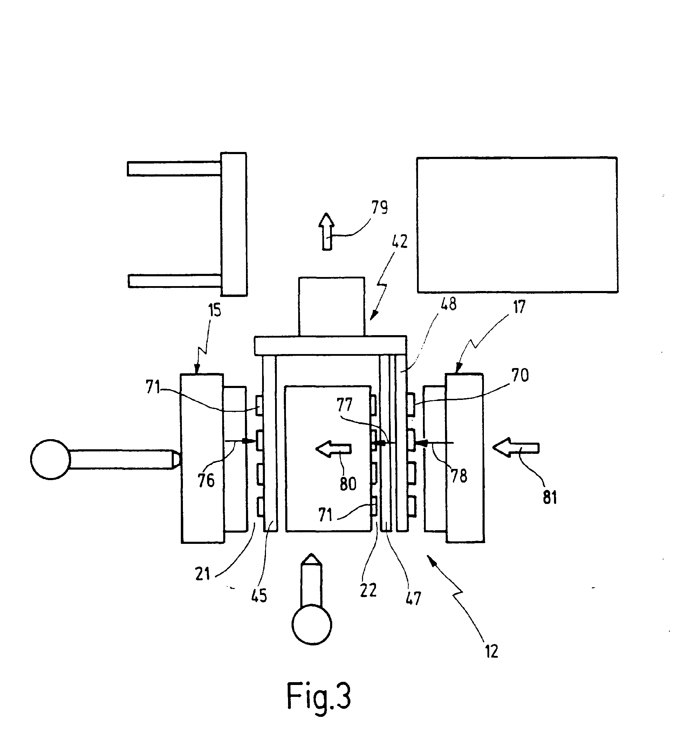

Im darauffolgenden Arbeitsschritt gemäß Fig. 3 werden nun, wie mit einem Pfeil 76 angedeutet, die ersten Komponenten 71 von der ersten Werkzeughälfte 15 zur linken Oberfläche des ersten Arms 45 bzw. den dort befindlichen Aufnahmeplätzen 49a bis 49d übergeben. Gleichzeitig erfolgt eine Übergabe von ersten Komponenten 71, die vom ersten Teilarm 47 abgenommen und in die linken Hälften der zweiten Formhohlräume 32a bis 32d im Mittelpaket umgesetzt werden. Dies ist in Fig. 3 mit einem Pfeil 77 angedeutet.

Ebenfalls gleichzeitig findet ein Entformen der fertigen Kunststoffartikel 70 aus der zweiten Werkzeughälfte 17 statt. Die Kunststoffartikel 70 werden auf die rechte Oberfläche des zweiten Teilarms 48 bzw. die dort befindlichen Aufnahmeplätze 51a bis 51d übergeben. Dies ist in Fig. 3 mit einem Pfeil 78 angedeutet.

Sobald diese Übergaben (Pfeile 76, 77 und 78) abgeschlossen sind, fährt der Roboter 42 wieder nach oben, wie mit einem Pfeil 79 angedeutet. Sobald die Arme 45, 47 und 48 sich aus den Zwischenräumen 21 und 22 entfernt haben, schließt das Etagenwerkzeug 12, wie mit Pfeilen 80 und 81 angedeutet.

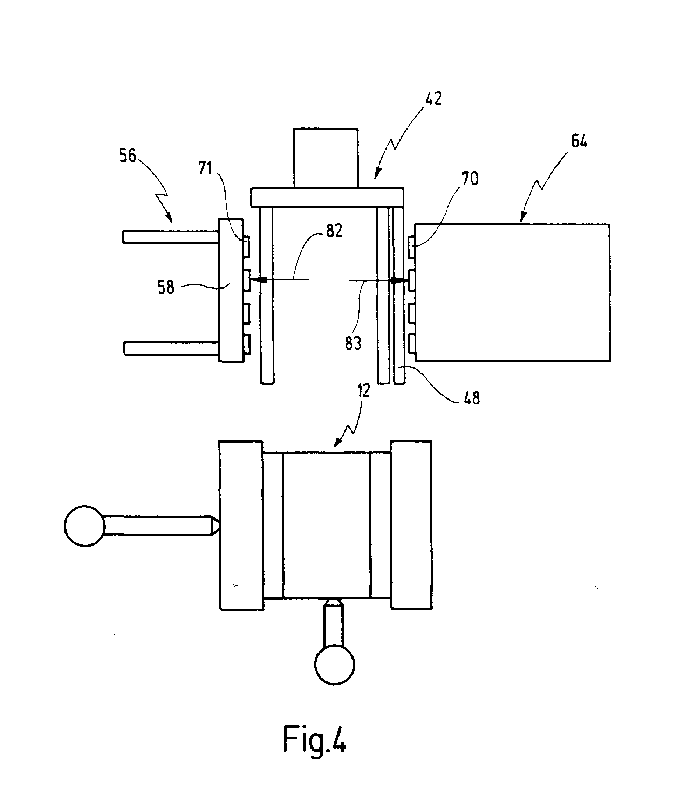

Fig. 4 zeigt den Zustand, in dem das Etagenwerkzeug 12 nunmehr geschlossen ist. Der Roboter 42 befindet sich in einer oberen Endstellung, die der Ausgangsstellung gemäß Fig. 1A entspricht.

Ein Pfeil 82 deutet an, daß die ersten Komponenten 71 nunmehr auf die Umsetzplatte 58 der Transferstation 56 übergeben werden. Gleichzeitig findet eine Übergabe der fertigen Kunststoffartikel 70 vom zweiten Teilarm 48 auf den Förderer 64 statt, wie mit einem Pfeil 83 angedeutet.

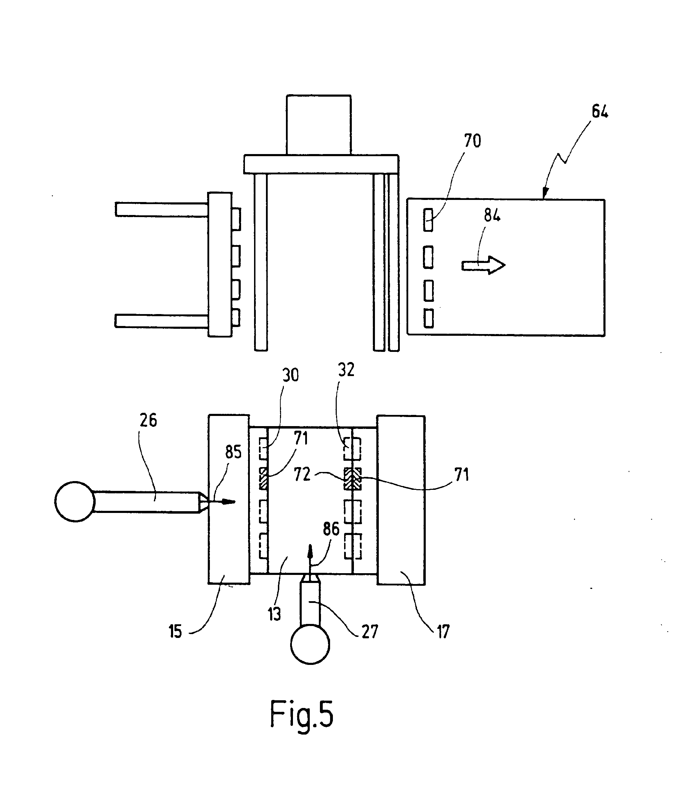

Fig. 5 zeigt, daß die Kunststoffartikel 70 nun auf dem Förderer 64 abgefördert werden, wie ein Pfeil 84 andeutet.

Während all dies geschieht, findet der nächste "Schuß" der Spritzgießmaschine statt.

Zu diesem Zweck wird aus dem ersten Spritzgießaggregat 26 eine vorbestimmte Menge flüssiger Kunststoffmasse an die erste Werkzeughälfte 15 abgegeben, wie mit einem Pfeil 85 gezeigt. Zur selben Zeit wird eine Verbindung zwischen dem zweiten Spritzgießaggregat 27 und dem Mittelpaket 13 hergestellt und ein mit einem Pfeil 86 angedeuteter Schuß vom zweiten Spritzgießaggregat 27 abgegeben.

Auf diese Weise werden mittels des ersten Spritzgießaggregates 26 erste Komponenten 71 in den ersten Formhohlräumen 30 erzeugt.

Andererseits wird durch das Einspritzen von Kunststoff aus dem zweiten Spritzgießaggregat 27 in das Mittelpaket 13 erreicht, daß die in der linken Formhohlraumhälfte der zweiten Formhohlräume 32 befindlichen ersten Komponenten 71 (vgl. Fig. 3) in die rechte Formhohlraumhälfte überführt werden und in dem frei werdenden Raum die zweiten Komponenten 72 auf die ersten Komponenten 71 aufgespritzt werden.

Fig. 6 zeigt nun das Tätigwerden der Transferstation 56. Damit diese sich bewegen kann, muß zuvor der erste Arm 45 aus der Bewegungsbahn der Transferstation 56 herausgefahren werden. Dies geschieht vorzugsweise in einer Linearbewegung nach oben, wie durch einen Pfeil 87 gezeigt. Nachdem auf diese Weise der Weg für die Transferstation 56 nach rechts frei ist, kann diese vorfahren, wie ein Pfeil 88 zeigt. Die auf der Platte 44 befindlichen ersten Komponenten 71 werden auf diese Weise nach rechts mitgenommen.

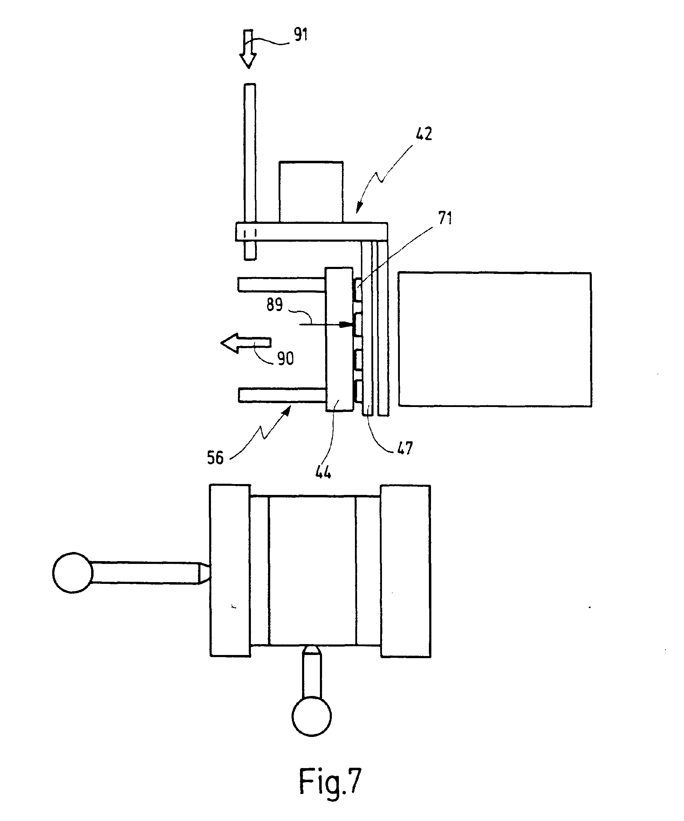

Sobald die Platte 44 ihre rechte Endposition erreicht hat, wie in Fig. 7 dargestellt, können die ersten Komponenten 71 auf den ersten Teilarm 47 übergeben werden, wie ein Pfeil 89 andeutet. In Richtung eines Pfeils 90 kann nun die Transferstation 56 wieder in ihre Ausgangsposition gemäß Fig. 1 bis 6 zurückgefahren werden.

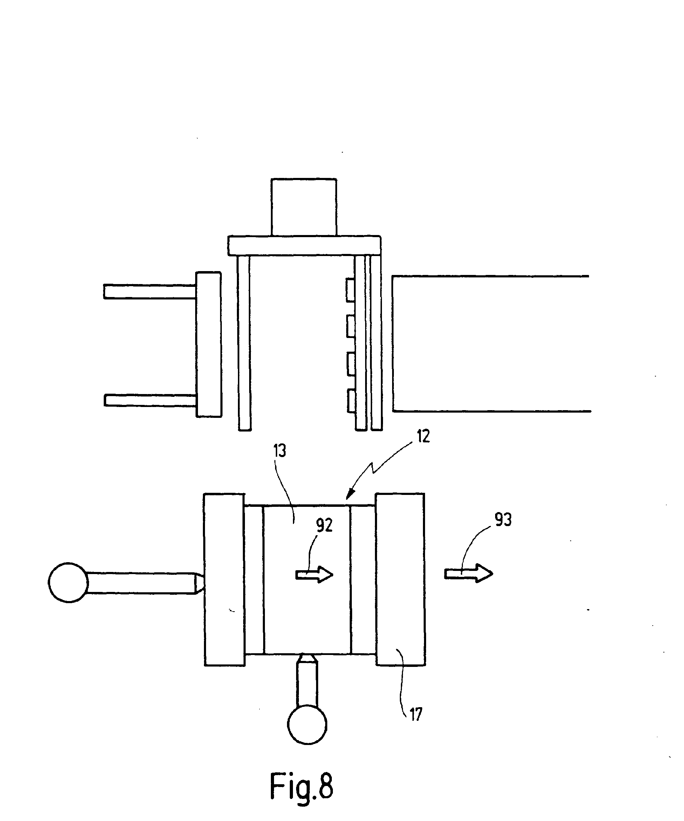

Wie Fig. 8 zeigt, kann nun das Etagenwerkzeug 12 geöffnet werden, wie mit Pfeilen 92 und 93 für das Mittelpaket 13 und die zweite Werkzeughälfte 17 gezeigt ist. Sobald das Etagenwerkzeug 12 vollständig geöffnet ist, hat die Spritzgießmaschine 10 wieder die Ausgangsstellung gemäß Fig. 1 erreicht.

Im Hinblick auf die vorstehende Schilderung des Arbeitsablaufes versteht sich, daß die in den Fig. 2 bis 8 dargestellten Phasen durchaus nicht zeitlich nacheinander ablaufen müssen, sondern vielmehr angestrebt wird, eine größtmögliche zeitliche Überlappung bis hin zum parallelen Ablauf zu erreichen, damit die Gesamt-Zykluszeit so kurz wie möglich wird. Wenn daher im Rahmen der vorstehenden Beschreibung einzelne Ablaufphasen nacheinander geschildert wurden, so bedeutet dies keineswegs, daß diese Phasen auch in der Realität zeitlich nacheinander ablaufen.

Es versteht sich weiterhin, daß die ausführlich dargestellten Umsetzvorgänge und Arbeitsabläufe nur beispielhaft zu verstehen sind. Daneben sind viele andere Arbeitsabläufe und Umsetzvorgänge denkbar, die demselben Prinzip gehorchen.

Wichtig ist dabei nur, daß sich die Formhohlräume (30a bis 30d) des einen Volumens stets in der einen Trennebene (I) befinden, während die Formhohlräume (32a bis 32d) des anderen Volumens alle in einer anderen Trennebene (II) angeordnet sind. Auf diese Weise lassen sich die Temperieraggregate 28 und 29 auf die jeweilige Formhohlraumgröße optimieren.

Weiterhin ist wichtig, daß beim Verfahren des Roboters 42, d.h. beim Einfahren der Arme 45 und 46 in die Zwischenräume 21 und 22, der Vorgang im wesentlichen synchron stattfindet, also alle Arme im wesentlichen gleichzeitig in die Zwischenräume 21 und 22 einfahren. Dies kann, wie im dargestellten Ausführungsbeispiel, in einfachster Weise dadurch geschehen, daß sich die Arme 45 und 46 auf derselben Platte 44 bewegen und gemeinsam mit dieser eingefahren werden. Alternativ dazu können die Arme 45 und 46 oder auch die Teilarme 47 und 48 mit unterschiedlichen Antrieben versehen sein, mit denen sie in die Zwischenräume 21 und 22 einfahrbar sind. In diesem Falle wäre es lediglich erforderlich, eine gewisse Synchronisierung der Antriebe zu gewährleisten.

Es wurde bereits weiter oben erwähnt, daß die Erfindung in vorteilhafter Weise auch bei anderen Bauformen von Werkzeugen eingesetzt werden kann. Hierzu zählen Etagenwerkzeuge mit mehr als einem Mittelpaket und zwei seitlichen Werkzeughälften, also beispielsweise mit fünf oder mehr Teilen. In einem solchen komplizierteren Etagenwerkzeug können z.B. Kunststoffartikel hergestellt werden, die aus drei, vier oder noch mehr Lagen bestehen. Andererseits läßt sich die Erfindung mit Vorteil auch bei ganz einfachen Werkzeugen einsetzen, also bei Werkzeugen, die nur in herkömmlicher Weise aus zwei Werkzeughälften bestehen. Im Rahmen fachmännischen Handelns können die oben beschriebenen Bewegungsvorgänge dann entsprechend angepaßt werden, ebenso gegebenenfalls die erforderlichen Handlinggeräte.

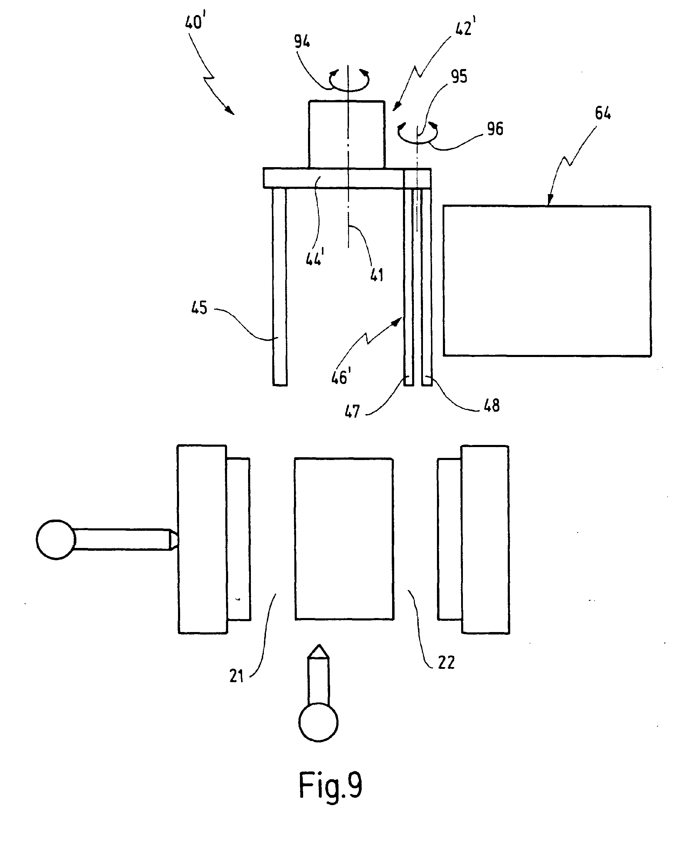

Ein erstes Beispiel für eine mögliche Variante ist in Fig. 9 dargestellt. Die Elemente sind dabei mit gleichen Bezugszeichen versehen; dort, wo Abweichungen gegenüber dem Ausführungsbeispiel gemäß Fig. 1 bis 8 vorhanden sind, wurde lediglich ein Apostroph hinzugefügt.

Bei der Anordnung gemäß Fig. 9 wird ein Handlingsystem 40' verwendet, bei dem keine Transferstation erforderlich ist.

Statt dessen ist der Roboter 42' zusätzlich um die zweite Achse 41 drehbar ausgebildet, wie mit einem Doppelpfeil 94 angedeutet. Durch diese Drehbarkeit kann erreicht werden, daß in der einen Endstellung der Drehung der erste Arm 45 mit dem ersten Zwischenraum 21 und der zweite Arm 46' mit dem zweiten Zwischenraum 22 fluchtet, insoweit also gleiche Verhältnisse wie bisher geschildert vorliegen.

In der anderen Endstellung der Drehbewegung, die in Fig. 9 nicht dargestellt ist, sind die Verhältnisse jedoch umgekehrt, weil nunmehr der erste Arm 45 mit dem zweiten Zwischenraum 22 und der zweite Arm 46' mit dem ersten Zwischenraum 21 fluchtet.

Ferner ist der zweite Arm 46' insgesamt um eine dritte Achse 95 drehbar, die parallel zur zweiten Achse 41 verläuft. Dies ist in Fig. 9 mit einem Doppelpfeil 96 angedeutet.

Auf diese Weise ist es möglich, die Position der Teilarme 47 und 48 zu vertauschen. Auf diese Weise kann die Position des Förderers 64 bzw. dessen Ausbildung unverändert bleiben.

Die einzelnen Phasen der Übergabe und des Verfahrens der Komponenten 71, 72 bzw. des Kunststoffartikels 70 ergeben sich für den Fachmann aus entsprechender Abwandlung der weiter oben gegebenen Schilderung zu den Fig. 2 und 8.

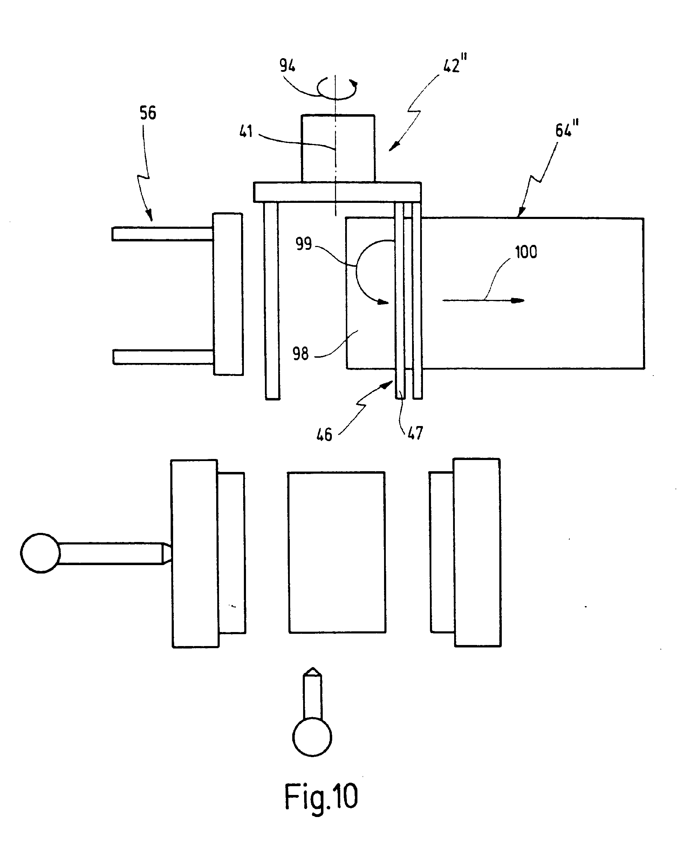

Entsprechendes gilt für die zweite Variante gemäß Fig. 10. Bei dieser zweiten Variante sind wiederum gleiche Elemente mit gleichen Bezugszeichen versehen, und nur die veränderten Elemente sind mit einem Doppelapostroph hervorgehoben.

Die Variante gemäß Fig. 10 unterscheidet sich von der Variante gemäß den Fig. 1 bis 8 dadurch, daß der Roboter 42'' wiederum um die zweite Achse 41 drehbar angeordnet ist, wie erneut mit dem Doppelpfeil 94 gekennzeichnet. Der zweite Arm 46 ist hingegen nicht drehbar. Andererseits ist bei diesem Ausführungsbeispiel wiederum eine Transferstation 56 vorgesehen.

Da sich bei der daraus abzuleitenden Schrittfolge die fertigen Kunststoffartikel 70 nunmehr auf der linken Hälfte des ersten Teilarms 47 befinden, wenn sie dem Förderer 64'' übergeben werden sollen, ist dieser mit einem Abschnitt 98 nach links bis unter den ersten Teilarm 47 hinaus verlängert. Die Kunststoffartikel 70 werden dann von der linken Seite des ersten Teilarms 47 auf den Förderer 64' übergeben und von dort unter dem zweiten Arm 46 hindurch abgefördert, wie mit Pfeilen 99 und 100 angedeutet.

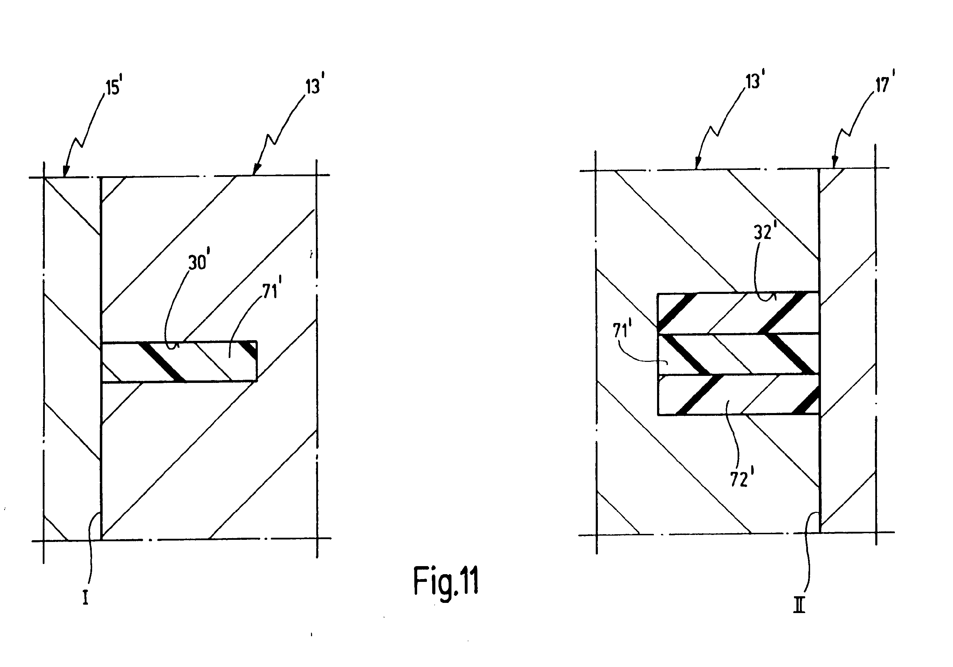

Fig. 11 zeigt in Anlehnung an Fig. 1A und 1B ein weiteres Ausführungsbeispiel der Erfindung. Man erkennt in der linken Hälfte von Fig. 11 im Mittelpaket 13' einen ersten Formhohlraum 30', der z.B. eine kreiszylindrische Form hat. In den ersten Formhohlraum 30' ist bereits die erste Komponente 71' eingespritzt.

In der rechten Hälfte von Fig. 11 sieht man den zweiten Formhohlraum 32', in den die erste Komponente 71' z.B. axial eingelegt ist, derart, daß um sie herum ein Freiraum verbleibt. Die erste Komponente 71' wird an ihren Stirnseiten mittels Haltern (nicht gezeigt) im zweiten Formhohlraum 32' festgehalten.

Dieser ist in Fig. 11 bereits mit der zweiten Komponente 72' ausgespritzt, die sich somit zylindermantelähnlich um die erste Komponente 71' herumlegt. Die erste Komponente 71' bildet somit einen "Kern", um den herum eine (72') oder mehrere Lagen herumgespritzt werden können. Diese Lagen können aus unterschiedlichen Kunststoffen bestehen, wobei z.B. der innere Kunststoff hart und der äußere Kunststoff weich sein kann. Die Kunststoffe können auch unterschiedliche Farben haben.

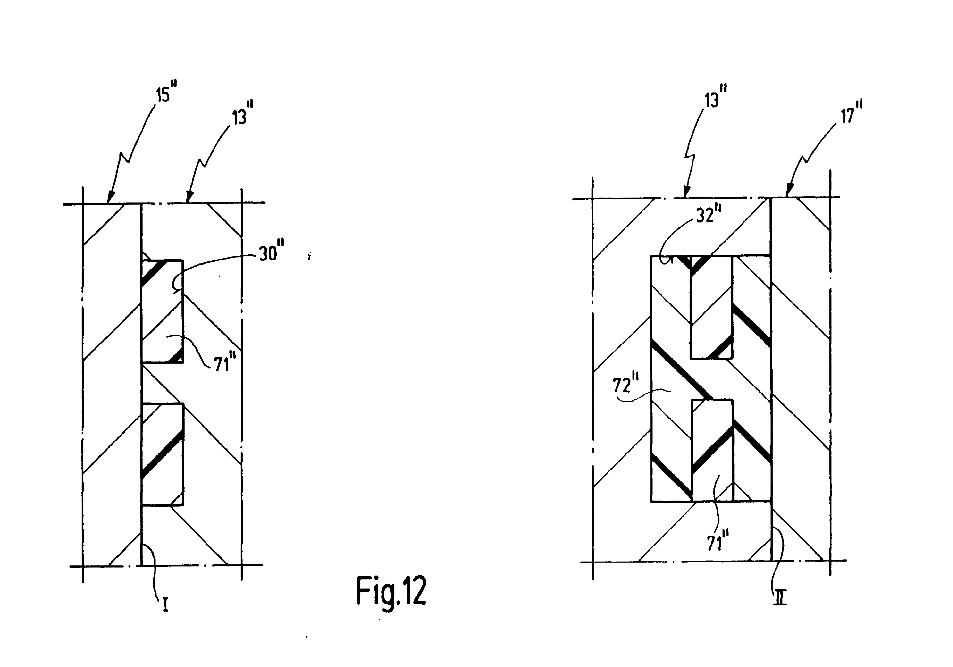

Fig. 12 zeigt eine Variante zum Ausführungsbeispiel gemäß Fig. 11. In Fig. 12 wird zunächst (linke Hälfte) ein Vorformling als ringförmige erste Komponente 71" im ersten Formhohlraum 32" hergestellt. Nach Überführung (rechte Hälfte) in den zweiten Formhohlraum 32" wird die erste Komponente 71" in der gezeigten mittleren Stellung im zweiten Formhohlraum 32" fixiert, so daß er von beiden Seiten zugänglich ist. Der zweite Formhohlraum 32" wird nun ausgespritzt, wobei die so gebildete zweite Komponente 72" die erste Komponente 71" durchdringt.

Auf die vorstehend geschilderten Weisen lassen sich komplexe, durchaus auch dickwandige oder kompakt-einstückige Kunststoffartikel herstellen. Vorzugsweise verwendet man für die Komponenten unterschiedliche Kunststoffe von z.B. unterschiedlicher Festigkeit und/oder Farbe.

Obwohl die Erfindung, wie erwähnt, nicht auf die Herstellung von Mehrkomponenten-Kunststoffartikeln beschränkt ist, sei abschließend erwähnt, daß derartige Mehrkomponentenartikel in zunehmendem Maße eine technische und wirtschaftliche Bedeutung gewinnen. Bei derartigen Artikeln werden zwei Kunststoffe in einer Art und Weise verbunden, daß jeweils der Kunststoff mit der besten Eignung dort plaziert wird, wo er am Spritzgußteil im Praxiseinsatz gefordert wird und sich besonders bewährt. Insofern ist diese Technik gerade für den anspruchsvollen Spritzguß von höchster Attraktivität.

Bei derartigen Überlegungen ist zwingend auch die Frage nach der Verbindung von Thermoplasten mit Elastomeren aller Art und auch Duroplasten zu stellen. Der erreichte Verbund ist von großer Bedeutung und wird unter anderem vom beschriebenen Verfahren und den dabei wirksamen Parametern beeinflußt. Die Kühlzeit der ersten Komponente, eine oft notwendige Wartezeit bis zum Anspritzen der zweiten Komponente, kann für den Verbund von Bedeutung sein. Insofern beeinflussen sich die Spritzgießvorgänge in den beiden Formhohlräumen. Es kann infolgedessen für die Funktion der Teile, den zeitlich optimalen Zyklusablauf und die Wirtschaftlichkeit günstig sein, wenn man eine technische Lösung verfügbar hat, die eine optimale Funktionstrennung ermöglicht.

Besonders deutlich wird dieses, wenn man die Absicht hat, in einem Kunststoffartikel Duroplasten und/oder Kautschuk mit Thermoplasten zu verbinden. Dabei erfordert die Härtetemperatur eine thermische Trennung der thermoplastischen und der duroplastischen und/oder Kautschukkomponente voneinander. Dieses ist ein bis heute nicht zuverlässig gelöstes Problem. Es ist z.B. nach dem Stand der Technik nicht möglich, die Härtetemperatur eines Duroplasten oder eines Kautschuks auf Thermoplaste einwirken zu lassen. Ein heißer Formhohlraum ist für Thermoplaste ungeeignet.

Demgegenüber hat die Erfindung eine Reihe von Vorteilen, indem nämlich stark unterschiedliche, für die jeweiligen Kunststoffe und ihr Verbundverhalten optimale Werkzeugtemperaturen in unterschiedlichen Bereichen des Werkzeugs gewählt werden können. Dies führt zu einer besseren Formteilqualität und zu einer Verkürzung der Zykluszeiten.

## Patentansprüche

1. Verfahren zum Spritzgießen von aus mehreren Komponenten (71, 72) bestehenden Kunststoffartikeln (70) mit den Schritten:
a) Bereitstellen einer Spritzgießmaschine (10) mit einem Etagenwerkzeug (12), bei dem ein Mittelpaket (13) auf einer ersten Seite (14) über eine erste Trennebene (I) mit einer ersten Werkzeughälfte (15) und auf einer zweiten Seite (16) über eine zweite Trennebene (II) mit einer zweiten Werkzeughälfte (17) zusammenarbeitet, wobei das Etagenwerkzeug (12) eine Mehrzahl von ersten, kleineren Formhohlräumen (30a - 30d) sowie eine Mehrzahl von zweiten, größeren Formhohlräumen (32a - 32d) aufweist;
b) Spritzgießen der ersten Komponenten (71) der Kunststoffartikel (70) in den in der ersten Trennebene (I) befindlichen ersten Formhohlräumen (30a - 30d);
c) Entformen der ersten Komponenten (71) aus den ersten Formhohlräumen (30a - 30d);
d) Überführen der ersten Komponenten (71) aus der ersten Trennebene (I) in die zweite Trennebene (II);
e) Einlegen der ersten Komponenten (71) in die zweiten Formhohlräume (32a - 32d);
f) Spritzgießen der zweiten Komponenten (72) auf die ersten Komponenten (71) in den zweiten Formhohlräumen (32a - 32d);
g) Entformen der Kunststoffartikel (70) aus den zweiten Formhohlräumen (32),
**dadurch gekennzeichnet, daß** das Etagenwerkzeug (12) im Bereich der ersten Trennebene (I) und im Bereich der zweiten Trennebene (II) unterschiedlich temperiert wird.

2. Verfahren zum Spritzgießen von aus mehreren Komponenten (71, 72) bestehenden Kunststoffartikeln (70) mit den Schritten:
a) Bereitstellen einer Spritzgießmaschine (10) mit einem Etagenwerkzeug (12), bei dem ein Mittelpaket (13) auf einer ersten Seite (14) über eine erste Trennebene (I) mit einer ersten Werkzeughälfte (15) und auf einer zweiten Seite (16) über eine zweite Trennebene (II) mit einer zweiten Werkzeughälfte (17) zusammenarbeitet, wobei das Etagenwerkzeug (12) eine Mehrzahl von ersten, kleineren Formhohlräumen (30a - 30d) sowie eine Mehrzahl von zweiten, größeren Formhohlräumen (32a - 32d) aufweist;
b) Spritzgießen der ersten Komponente (71) des Kunststoffartikels (70) in einem in der ersten Trennebene (I) befindlichen ersten Formhohlraum (30);
c) Entformen der ersten Komponente (71) aus dem ersten Formhohlraum (30);
d) Überführen der ersten Komponente (71) aus der ersten Trennebene (I) in die zweite Trennebene (II);
e) Einlegen der ersten Komponente (71) in den zweiten Formhohlraum (32);
f) Spritzgießen der zweiten Komponente (72) auf die erste Komponente (71) im zweiten Formhohlraum (32);
g) Entformen des Kunststoffartikels (70) aus dem zweiten Formhohlraum (32),
**dadurch gekennzeichnet, daß** die Schritte c), e) und g) im wesentlichen unabhängig voneinander durchgeführt werden.

3. Verfahren nach Anspruch 2, **dadurch gekennzeichnet, daß** das Etagenwerkzeug (12) im Bereich der ersten Trennebene (I) und im Bereich der zweiten Trennebene (II) unterschiedlich temperiert wird.

4. Verfahren zum Spritzgießen von Kunststoffartikeln (70) in einer Spritzgießmaschine (10) mit einem Werkzeug (12), bei dem mindestens eine erste Werkzeughälfte über mindestens eine Trennebene mit mindestens einer zweiten Werkzeughälfte zusammenarbeitet, **dadurch gekennzeichnet, daß** das Werkzeug (12) in unterschiedlichen Bereichen der mindestens einen Trennebene unterschiedlich temperiert wird.

5. Verfahren nach Anspruch 4, **dadurch gekennzeichnet, daß** die Spritzgießmaschine (10) ein Etagenwerkzeug (12) umfaßt, bei dem ein Mittelpaket (13) auf einer ersten Seite (14) über eine erste Trennebene (I) mit einer ersten Werkzeughälfte (15) und auf einer zweiten Seite (16) über eine zweite Trennebene (II) mit einer zweiten Werkzeughälfte (17) zusammenarbeitet, und daß das Etagenwerkzeug (12) im Bereich der ersten Trennebene (I) und im Bereich der zweiten Trennebene (II) unterschiedlich temperiert wird.

6. Verfahren nach Anspruch 5, **dadurch gekennzeichnet, daß** das Etagenwerkzeug (12) im Bereich der ersten Trennebene (I) eine Mehrzahl von ersten, kleineren Formhohlräumen (30a - 30d) sowie im Bereich der zweiten Trennebene (II) eine Mehrzahl von zweiten, größeren Formhohlräumen (32a - 32d) aufweist, und daß die Kunststoffartikel in den Formhohlräumen (30a - 30d, 32a - 32d) spritzgegossen werden.

7. Verfahren zum Spritzgießen von aus mehreren Komponenten bestehenden Kunststoffartikeln (70), insbesondere nach einem oder mehreren der Ansprüche 1 bis 6, bei dem zunächst eine erste Komponente (71'; 71") durch Spritzgießen hergestellt und dann eine zweite Komponente (72'; 72") an die erste Komponente (71'; 71") gespritzt wird, **dadurch gekennzeichnet, daß** die zweite Komponente (72'; 72") die erste Komponente (71'; 71") im wesentlichen umhüllt.

8. Verfahren nach Anspruch 7, **dadurch gekennzeichnet, daß** die erste Komponente (71') im wesentlichen zylindrisch ist und daß die zweite Komponente (72') die erste Komponente (71') nach Art eines Zylindermantels umgibt.

9. Verfahren nach Anspruch 7, **dadurch gekennzeichnet, daß** die zweite Komponente (72") die erste Komponente (71") durchdringt.

10. Vorrichtung zum Spritzgießen von aus mehreren Komponenten (71, 72) bestehenden Kunststoffartikeln (70) mit:
a) einer Spritzgießmaschine (10) mit einem Etagenwerkzeug (12), bei dem ein Mittelpaket (13) auf einer ersten Seite (14) über eine erste Trennebene (I) mit einer ersten Werkzeughälfte (15) und auf einer zweiten Seite (16) über eine zweite Trennebene (II) mit einer zweiten Werkzeughälfte (17) zusammenarbeitet, wobei das Etagenwerkzeug (12) eine Mehrzahl von ersten, kleineren Formhohlräumen (30a - 30d) sowie eine Mehrzahl von zweiten, größeren Formhohlräumen (32a - 32d) aufweist;
b) Mitteln (26, 27) zum Spritzgießen
- von ersten Komponenten (71) des Kunststoffartikels (70) in den in der ersten Trennebene (I) befindlichen ersten Formhohlräumen (30a - 30d), und
- von zweiten Komponenten (72) auf die ersten Komponenten (71) in den zweiten Formhohlräumen (32a - 32d);
c) einem Handlingsystem (40) zum
- Entformen der ersten Komponenten (71) aus den ersten Formhohlräumen (30a - 30d),
- Überführen der ersten Komponenten (71) aus der ersten Trennebene (I) in die zweite Trennebene (II),
- Einlegen der ersten Komponenten (71) in die zweiten Formhohlräume (32a - 32d), und
- Entformen der Kunststoffartikel (70) aus den zweiten Formhohlräumen (32a - 32d),
**dadurch gekennzeichnet, daß** das Etagenwerkzeug (12) im Bereich der ersten Trennebene (I) und im Bereich der zweiten Trennebene (II) mit Aggregaten (28, 29) zum unterschiedlichen Temperieren versehen ist.

11. Vorrichtung zum Spritzgießen von aus mehreren Komponenten (71, 72) bestehenden Kunststoffartikeln (70) mit:
a) einer Spritzgießmaschine (10) mit einem Etagenwerkzeug (12), bei dem ein Mittelpaket (13) auf einer ersten Seite (14) über eine erste Trennebene (I) mit einer ersten Werkzeughälfte (15) und auf einer zweiten Seite (16) über eine zweite Trennebene (II) mit einer zweiten Werkzeughälfte (17) zusammenarbeitet, wobei das Etagenwerkzeug (12) eine Mehrzahl von ersten, kleineren Formhohlräumen (30a - 30d) sowie eine Mehrzahl von zweiten, größeren Formhohlräumen (32a - 32d) aufweist;
b) Mitteln (26, 27) zum Spritzgießen
- einer ersten Komponente (71) des Kunststoffartikels (70) in einem in der ersten Trennebene (I) befindlichen ersten Formhohlraum (30), und
- einer zweiten Komponente (72) auf die erste Komponente (71) im zweiten Formhohlraum (32);
c) einem Handlingsystem (40) zum
- Entformen der ersten Komponente (71) aus dem ersten Formhohlraum (30),
- Überführen der ersten Komponente (71) aus der ersten Trennebene (I) in die zweite Trennebene (II),
- Einlegen der ersten Komponente (71) in den zweiten Formhohlraum (32), und
- Entformen des Kunststoffartikels (70) aus dem zweiten Formhohlraum (32),
**dadurch gekennzeichnet, daß** das Handlingsystem (40) mindestens zwei Arme (45, 46) aufweist, die im wesentlichen unabhängig voneinander in die erste (I) und in die zweite (II) Trennebene einfahrbar sind.

12. Vorrichtung nach Anspruch 11, **dadurch gekennzeichnet, daß** das Etagenwerkzeug (12) im Bereich der ersten Trennebene (I) und im Bereich der zweiten Trennebene (II) mit Aggregaten (28, 29) zum unterschiedlichen Temperieren versehen ist.

13. Vorrichtung zum Spritzgießen von Kunststoffartikeln (70) in einer Spritzgießmaschine (10) mit einem Werkzeug (12), bei dem mindestens eine erste Werkzeughälfte über mindestens eine Trennebene mit mindestens einer zweiten Werkzeughälfte zusammenarbeitet, **dadurch gekennzeichnet, daß** Mittel vorgesehen sind, um das Werkzeug (12) in unterschiedlichen Bereichen der mindestens einen Trennebene unterschiedlich zu temperieren.

14. Vorrichtung nach Anspruch 13, **dadurch gekennzeichnet, daß** die Spritzgießmaschine (10) ein Etagenwerkzeug (12) umfaßt, bei dem ein Mittelpaket (13) auf einer ersten Seite (14) über eine erste Trennebene (I) mit einer ersten Werkzeughälfte (15) und auf einer zweiten Seite (16) über eine zweite Trennebene (II) mit einer zweiten Werkzeughälfte (17) zusammenarbeitet, und daß das Etagenwerkzeug (12) im Bereich der ersten Trennebene (I) und im Bereich der zweiten Trennebene (II) mit Mitteln zum unterschiedlichen Temperieren versehen ist.

15. Vorrichtung nach Anspruch 14, **dadurch gekennzeichnet, daß** das Etagenwerkzeug (12) im Bereich der ersten Trennebene (I) eine Mehrzahl von ersten, kleineren Formhohlräumen (30a - 30d) sowie im Bereich der zweiten Trennebene (II) eine Mehrzahl von zweiten, größeren Formhohlräumen (32a - 32d) aufweist.

16. Vorrichtung nach einem oder mehreren der Ansprüche 10 bis 15, **dadurch gekennzeichnet, daß** das Handlingsystem (40) einen Roboter (42) mit Armen (45, 46) aufweist, und daß die Arme (45, 46) bei geöffnetem Etagenwerkzeug (12) im wesentlichen quer zur Öffnungsrichtung (92, 93) des Etagenwerkzeuges (12) in Zwischenräume (21, 22) zwischen dem Mittelpaket (13) und der ersten (15) bzw. zweiten (17) Werkzeughälfte einfahrbar sind und sich im wesentlichen in Einfahrrichtung (75) erstrecken.

17. Vorrichtung nach einem oder mehreren der Ansprüche 10 bis 12 oder 16, **dadurch gekennzeichnet, daß** ein in die erste Trennebene (I) einfahrbarer erster Arm (45) einseitig und ein in die zweite Trennebene (II) einfahrbarer zweiter Arm (46) beidseitig mit Aufnahmen (49a - 49d, 50a - 50d, 51a - 51d) für erste Komponenten (71) bzw. Kunststoffartikel (70) versehen sind.

18. Vorrichtung nach Anspruch 17, **dadurch gekennzeichnet, daß** der zweite Arm (46) zwei Teilarme (47, 48) aufweist und daß die Aufnahmen (50a - 50d bzw. 51a - 51d) des zweiten Armes (46) auf voneinander weg weisenden Seiten der Teilarme (47, 48) angeordnet sind.

19. Vorrichtung nach Anspruch 17 oder 18, **dadurch gekennzeichnet, daß** eine Transferstation (56) zum Umsetzen der ersten Komponenten (71) aus den Aufnahmen (49a - 49d) des ersten Armes (45) in Aufnahmen (50a - 50d) des zweiten Armes (46) vorgesehen ist.

20. Vorrichtung nach Anspruch 19, **dadurch gekennzeichnet, daß** die Transferstation (56) quer zu den Seiten der Arme (45, 46) verfahrbar (88, 90) ist.

21. Vorrichtung nach Anspruch 20, **dadurch gekennzeichnet, daß** die Transferstation (56) in einer Ruhestellung seitlich neben dem ersten Arm (45) angeordnet ist, und daß die ersten Komponenten (71) vom ersten Arm (45) auf die Transferstation (56) übergebbar sind.

22. Vorrichtung nach Anspruch 21, **dadurch gekennzeichnet, daß** der erste Arm (45) nach der Übergabe der ersten Komponenten (71) aus der Bewegungsbahn der Transferstation (56) bringbar und die Transferstation in eine Stellung neben dem zweiten Arm (46) bewegbar ist.

23. Vorrichtung nach Anspruch 17 oder 18, **dadurch gekennzeichnet, daß** der Roboter (42) um eine zur Einfahrrichtung (75) parallele Achse (41) drehbar ist, derart, daß nach erfolgter Drehung der erste Arm (45) mit der zweiten Trennebene (II) und der zweite Arm (46) mit der ersten Trennebene (I) fluchtet.

24. Vorrichtung nach Anspruch 23, **dadurch gekennzeichnet, daß** der zweite Arm (46) um eine zur Einfahrrichtung (75) parallele Achse (95) drehbar ist.

25. Vorrichtung nach einem oder mehreren der Ansprüche 10 bis 24, **dadurch gekennzeichnet, daß** ein Förderer (64) zum Abfördern der Kunststoffartikel (70) im Bereich des zweiten Armes (46) vorgesehen ist.

26. Vorrichtung nach Anspruch 25, **dadurch gekennzeichnet, daß** die Kunststoffartikel (70) vom zweiten Arm (46) auf der vom ersten Arm (45) abgewandten Seite auf den Förderer (64) überführbar sind.

27. Vorrichtung nach Anspruch 24 und 25, **dadurch gekennzeichnet, daß** die Kunststoffartikel (70) vom zweiten Arm (46") auf der dem ersten Arm (45") zugewandten Seite auf den Förderer (64") überführbar sind.
